# EUROPÄISCHE PATENTANMELDUNG

(11) **EP 0 794 498 A2**
(43) Veröffentlichungstag der Anmeldung: **10.09.1997**
(21) Anmeldenummer: 97103186.9
(22) Anmeldetag: 27.02.1997
(51) Int. Cl.: G06K 7/06

(54) **Codekartenleser**

(30) Priorität: 05.03.1996 DE 19608403
(71) Anmelder: Vogler, Bernhard, 97353 Wiesentheid (DE)
(72) Erfinder: Vogler, Bernhard, 97353 Wiesentheid (DE)
(74) Vertreter: Rehmann, Klaus-Thorsten, Dipl.-Ing.

(57) **Zusammenfassung**

Ein Codekartenleser mit einem Kontaktträger (9), der in vertikaler und horizontaler Richtung bewegbar ist und Kontakte (3 ) aufweist, die in Berührung mit der Kontaktierungsfläche eines integrierten Schaltkreis einer Codekarte (8) bringbar sind, zeichnet sich dadurch aus, daß die Vertikalbewegung des Kontaktträgers (9) in Abhängigkeit der Horizontalbewegung durch ein kinematisch starres Getriebe einleitbar ist.

## Beschreibung

Die Erfindung betrifft einen Codekartenleser mit einem Kontaktträger, der in vertikaler und horizontaler Richtung bewegbar ist und Kontakte aufweist, die in Berührung mit der Kontaktierungsfläche eines integrierten Schaltkreises einer Codekarte bringbar sind.

Codekartenleser werden beispielsweise in Geldautomaten oder als Zugangskontroll-Einrichtungen beispielsweise in Sicherheitsbereichen oder Parkhäusern eingesetzt. Bei Kartenlesern mit motorischem Antrieb wird die Codekarte über einen Friktionsantrieb eingezogen. Hierzu sind entweder mit einem Elastomer beschichtete Walzen mit Gegendruckrollen oder beschichtete Zahnriemen, Flachriemen oder Rundriemen vorgesehen.

Die am Kontaktträger vorgesehenen Kontakte müssen, wenn die Codekarte vollständig in den Codekartenleser eingeführt ist, auf die Kontaktierungsfläche abgesenkt werden, um die Codekarte zu lesen. Die DE 38 15 959 beschreibt einen Kartenleser mit einem Schieber, der einen Anschlag aufweist, an dem das vordere Ende der den integrierten Schaltkreis aufweisenden Codekarte zur Anlage kommt, wodurch dann der Schieber von der Karte auf dem letzten Abschnitt der Einschubbewegung mitgenommen wird. Der Kontaktträger senkt sich mit den Kontaktfedern während des Einschiebens der Karte ohne Relativbewegung in Einschubrichtung auf die Karte ab, wodurch die Kontaktfedern auf die Karte aufsetzen. Zur Führung des Kontaktträgers sind in paralleler Lage zur Kartenbahn im Schieber über seitlich hierzu angeordnete Gehäuseteile Führungen vorgesehen, durch die der Kontaktträger lotrecht auf die Kartenbahn zuführbar ist. Die Führungen weisen neben einem geneigt zur Kartenbahn verlaufenden Abschnitt noch einen waagerecht hierzu verlaufenden Abschnitt auf, damit eine einwandfreie Kontaktierung erfolgen kann.

Bei der Absenkung des Kontaktträgers über eine schiefe Ebene treten vor allem bei längerem Betrieb Reibungsprobleme auf, die karteneinzugskraftmindernd wirken. Der Kartenschiebepunkt unterliegt einer Abnutzung. Hierdurch besteht die Gefahr, daß die Karte mit der Zeit unbrauchbar wird.

Die DE 38 10 274 A1 offenbart einen Codekartenleser, dessen Kontaktträger mit den Kontakten formschlüssig abgesenkt werden kann. Hierzu sind Führungsmittel mit unterschiedlichen Führungsbahnen vorgesehen. Der Kontaktträger wird über die Codekarte gegen die Kraft von Zugfedern in seine abgesenkte Stellung bewegt. Der hierin offenbarte Codekartenleser funktioniert nach dem Push-Pull-Prinzip, das heißt, auf die Codekarte muß, wenn sie in den Kartenleser eingesetzt wird, eine Schubkraft ("Push") ausgeübt werden, um den Kontaktträger zur Lesestellung hin zu verschieben. In der Lesestellung wird der Kontaktträger zusammen mit der Codekarte durch Brems- oder Haltemittel gegen die Kraft der Rückholfedern festgehalten. Will man die Karte nach dem Lesevorgang wieder entnehmen, so muß man an dem im allgemeinen aus dem Codekartenleser noch herausragenden Ende der Karte ziehen ("Pull"), um dadurch die Karte und den Kontaktträger gegenüber der Bremse freizusetzen. Bei dem Herausziehen der Chipkarte läuft dann auch der Kontaktträger wieder in seine Ausgangsstellung.

Es sind auch Codekartenleser bekannt, bei denen die Codekarte vollständig in das Kartengerät (beispielsweise Kartentelefon) eingeführt wird und die Bremse durch Betätigen eines Knopfes gelöst werden kann, wodurch dann der Kontaktträger mit der Codekarte aufgrund der Federkraft zurückfährt.

Durch die immer mehr zunehmende Miniaturisierung der Kartenleser bei gleichzeitiger Erhöhung der Leistungsfähigkeit und der steigenden Akzeptanz von Codekarten bei der Bevölkerung, werden an die Codekartenleser immer höhere Anforderungen gestellt. Die Bauhöhe des Kartenlesers muß möglichst niedrig sein. Zur Vermeidung von Schäden, die dem Betreiber der Codekartenleser durch gefälschte Karten entstehen können, sollte eine Möglichkeit vorgesehen sein, als falsch oder gar gestohlen erkannte Karten einzuziehen und diese nicht wieder an den Benutzer zurückzuführen. So werden beispielsweise EC-Karten eingezogen, wenn nach einer festgelegten Anzahl von Versuchen der Pin-Code vom Benutzer nicht richtig eingegeben wurde. Da die Codekarten immer häufiger verwendet werden, muß das Lesegerät so ausgestaltet sein, daß an der Codekarte möglichst kein bzw. nur ein geringer Verschleiß auftritt. Insbesondere muß an der Stoßkante und der Kontaktierungsfläche ein Verschleiß ausgeschlossen sein, weil die Karte ansonsten unbrauchbar wird.

Von dieser Problemstellung ausgehend soll der bekannte Codekartenleser verbessert werden.

Die Problemlösung erfolgt bei einem gattungsgemäßen Codekartenleser dadurch, daß die Vertikalbewegung des Kontaktträgers in Abhängigkeit von der Horizontalbewegung durch ein kinematisch starres Getriebe einleitbar ist.

Durch diese Ausgestaltung wird trotz geringer Bauhöhe eine lange effektive Kontaktierstrecke erreicht. Der Kontaktträger kann sich auf die Codekarte absenken, ohne daß die Codekarte selbst aus ihrer horizontalen Führungsbahn abgelenkt werden müßte. Da keine schiebende Reibung auftritt, wie sie beim Absenken über schiefe Ebenen oder Hebelwerke entsteht, wird der gesamte Absenk- und Abhebevorgang wesentlich erleichtert.

Das Getriebe wird vorzugsweise gebildet durch mindestens zwei exzentrisch an dem Kontaktträger gelagerte Zahnräder, die auf einer ortsfesten Zahnstange ablaufen, während der Kontaktträger von der Codekarte nach vorn geschoben wird.

Durch diese Ausbildung tritt nur rollende Reibung auf, die wesentlich geringer als schiebende Reibung ist. Dadurch kann die zum Kartentransport notwendige Kraft von einem miniaturisiertem Antriebsmotor aufgebracht werden. Durch entsprechend lange Ausbildung der Zahnstange wird eine Anhebbewegung des Kontaktträgers bezogen auf die Kontaktierposition in beide Richtungen möglich. Wird die Karte in Einschubrichtung fortbewegt, hebt sich der Kontaktträger ebenso an, wie wenn die Karte zurückbewegt wird. Dadurch kann im Bedarfsfalle die Codekarte weiter in das Lesegerät zum Einbehalten eingeführt oder an den Benutzer zurückgegeben werden.

Um den Kontaktträger durch die Codekarte nach vorn zu bewegen, weist dieser insbesondere vorzugsweise an seinem in Einschubrichtung vorderen Ende einen Anschlag auf, wobei die an den Anschlag anstoßende Codekarte den Kontaktträger in Horizontalrichtung mitnimmt. Dieser Anschlag wird von wenigstens einer Rolle gebildet. Vorzugsweise wird der Anschlag durch zwei Rollen gebildet, die in einem solchen parallelen Abstand angeordnet sind, daß sie nicht über die Kontaktierungsfläche der Codekarte rollen können, wenn die Karte einbehalten werden soll, weil dadurch eine Beschädigung der Kontaktierungsfläche eintreten könnte.

Die Bahnkurve des Kontaktträgers, das heißt ein Punkt auf dem Kontaktträger beschreibt bei der kombinierten Horizontal-/Vertikalbewegung eine Epizykloide. Dadurch tritt eine steile Absenk- bzw. Anhebekurve bei einer gleichzeitig flachen Kontaktierlänge auf.

Die Rückbewegung des Kontaktträgers erfolgt vorzugsweise über Federkräfte.

Anhand einer Zeichnung soll ein Ausführungsbeispiel der Erfindung nachfolgend näher erläutert werden.

Es zeigt:
- Figur 1 -: die Unteransicht auf den Kontaktträger,
- Figur 2 -: die Ansicht des Kontaktträgers gemäß Sichtpfeil II nach Figur 1,
- Figur 3 -: die Ansicht des Kontaktträgers gemäß Sichtpfeil III nach Figur 1,
- Figur 4 -: die Ansicht des Kontaktträgers ähnlich zu Figur 3 in vereinfachter Darstellung weiterer Bauteile des Lesegeräts,
- Figur 5 -: die Seitenansicht eines Führungsteiles für den Kontaktträger,

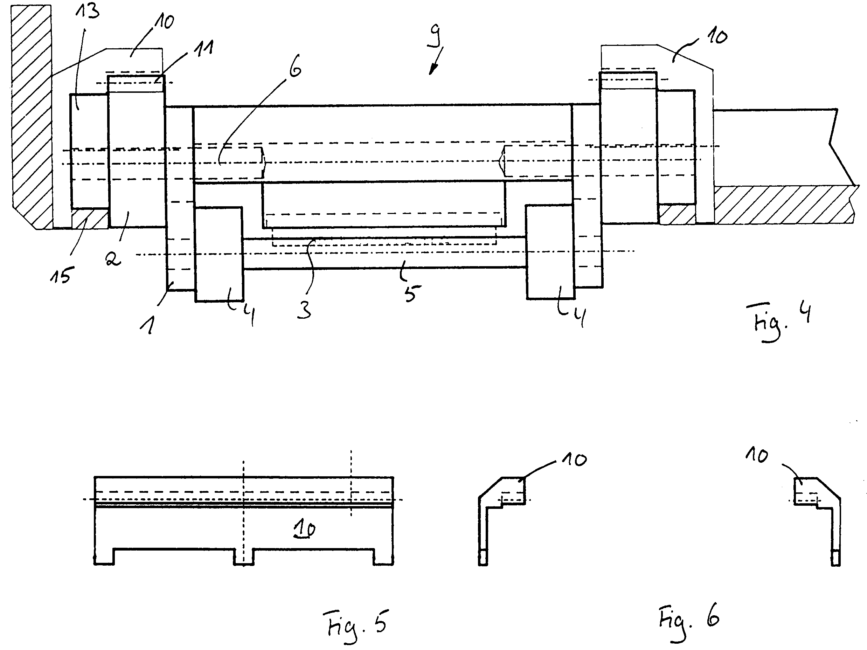

- Figur 6 -: die schematische Darstellung der Anordnung der Führungsteile gemäß Figur 5 im Lesegerät,
- Figur 7 -: die Bewegung des Kontaktträgers in drei Phasen des Einschubs der Codekarte,
- Figur 8 -: die Bahnkurve des Kontaktträgers,
- Figur 9 -: eine vereinfachte und gegenüber Figur 2 vergrößerte Seitenansicht des Kontaktträgers.

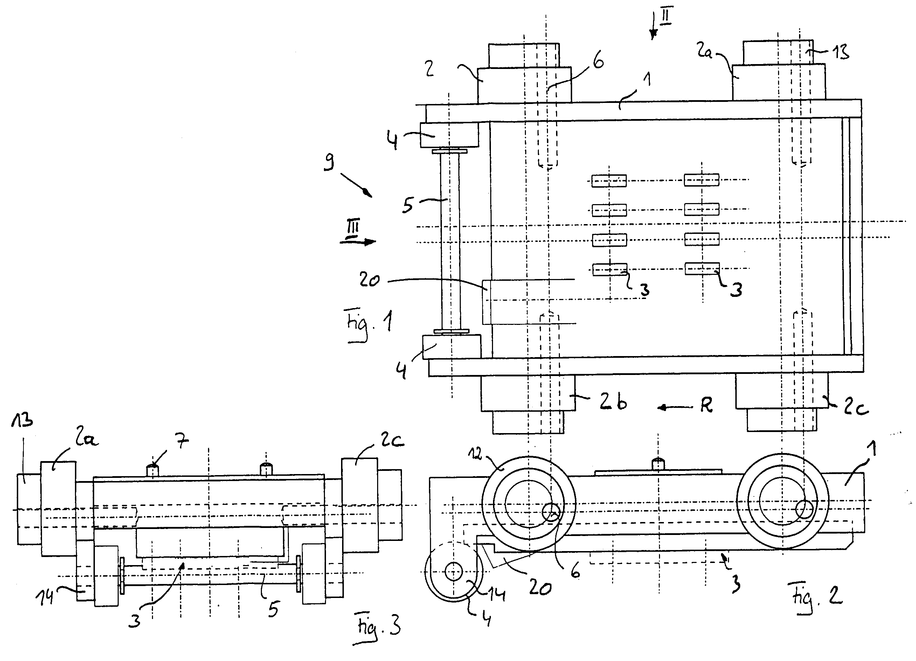

Wie Figuren 1 bis 3 zeigen besteht der Kontaktträger 9 aus dem Rahmen 1 mit den seitlich am Rahmen 1 exzentrisch gelagerten Zahnrädern 2, 2a, 2b, 2c. In seinem mittleren Bereich weist der Kontaktträger 9 an seiner Unterseite eine Mehrzahl von Kontakten 3 auf, die in vertikaler Richtung federnd angeordnet sind. An seinem in Einschubrichtung R der Codekarte 8 vorderen Ende ist der Kontaktträger 9 mit zwei Rollen 4 versehen, die über eine Achse 5 miteinander verbunden sind und jeweils an den beiden in Längsrichtung äußeren Teilen des Rahmens 1 gelagert sind. Ihre Achse erstreckt sich also rechtwinklig zur Einschubrichtung R. Seitlich über die Zahnräder 2, 2a, 2b, 2c nach außen hervorragend sind jeweils zylindrische Ansätze 13 vorgesehen, die konzentrisch mit den Zahnrädern 2, 2a, 2b, 2c verbunden sind. An der Oberseite des Kontaktträgers 9 sind Zentrierungen 7 vorgesehen, die dazu dienen, die Leiterplatte für die Kontaktstifte 3 richtig aufsetzen zu können.

Die zylindrischen Ansätze 13 der Zahnräder 2, 2a, 2b, 2c laufen auf horizontal im Lesegerät angeordneten Führungsbahnen 15 (Figur 4). Die Zähne 12 der Zahnräder 2, 2a, 2b, 2c rollen an einem bzw. zwei entsprechend verzahnten Zahnstangenkörpern 10 ab, die oberhalb der Führungsbahn 15 nach innen versetzt vorgesehen sind. Die beiden in Einschubrichtung R vorgesehenen und entsprechend dem Achsabstand der Zahnradpaare 2, 2b; 2a, 2c angeordneten Zahnstangenkörper 10 dienen als Führungsteile für den Kontaktträger 9. Durch die exzentrische Lagerung (Exzenterachse 6) der Zahnräder 2, 2a, 2b, 2c am Rahmen 1 sowie die konzentrische Anordnung der zylindrischen Ansätze 13 an den Zahnrädern 2, 2a, 2b, 2c führt der Kontaktträger 9 eine vertikale Bewegung durch, wobei der vertikale Weg in direkter Abhängigkeit zu dem zurückgelegten Weg in Horizontalrichtung steht. Ist die Exzenterachse 6 bezogen auf die Darstellung in Figur 4 in ihrem unteren Totpunkt, ist der Kontaktträger 9 und damit auch die Kontakte 3 abgesenkt, befinden sie sich in ihrem oberen Totpunkt ist der Kontaktträger 9 angehoben.

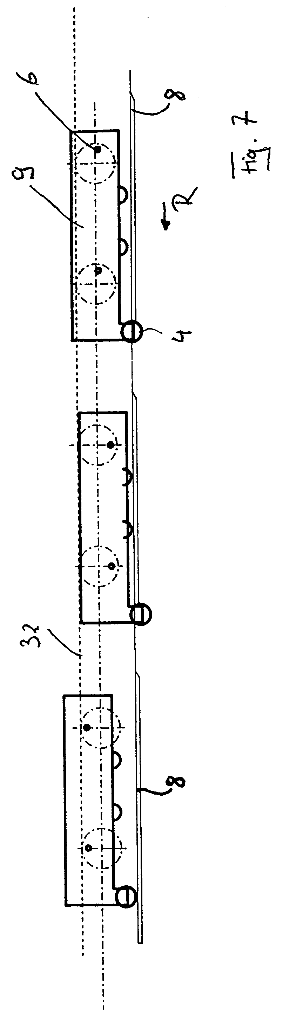

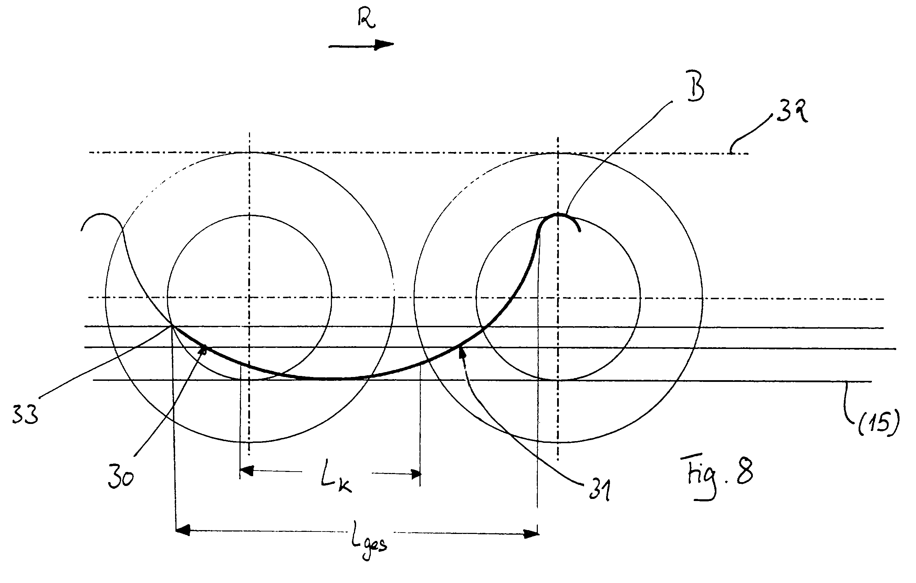

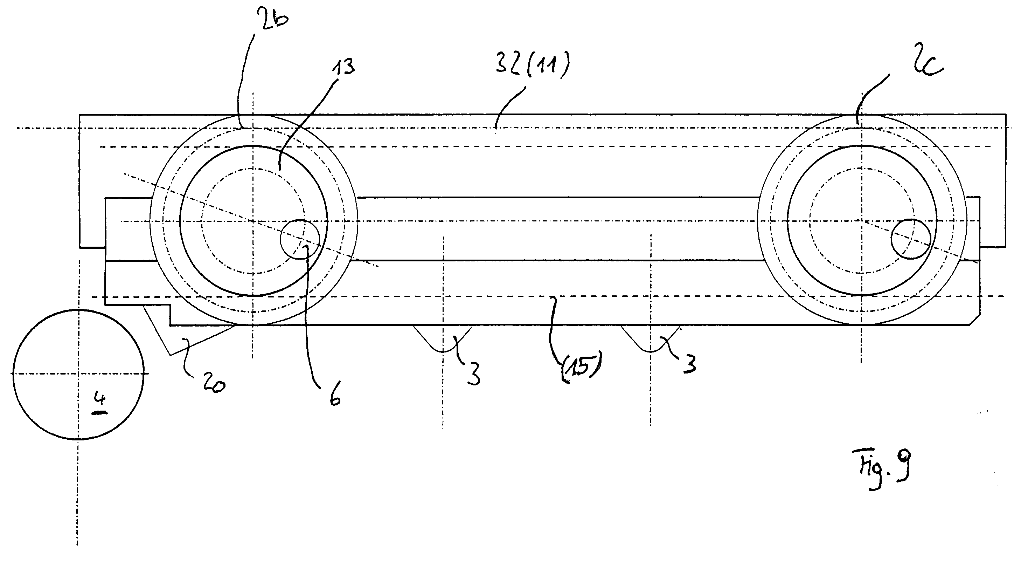

Diese Bewegung wird deutlich aus den Figuren 7 und 9. Die Teillinie der Zahnstange 11 des Zahnstangenkörpers 10 ist in diesen Figuren mit 32 bezeichnet. In seiner Ausgangsstellung befindet sich der Kontaktträger 9 in einer mittleren Lage. Die Exzenterachsen 6 der Zahräder 2, 2a, 2b, 2c befinden sich bezogen auf die Einschubrichtung R in ihrer hinteren Lage (vergleiche rechte Darstellung in Figur 7). Die Codekarte 8 wird in das hier nicht näher dargestellte Lesegerät eingeführt und stößt bei ihrer Bewegung in Einschubrichtung R gegen die beiden Rollen 4, die jeweils in einem Ansatz 14 am Rahmen 1 gelagert sind. Die Codekarte 8 wird beispielsweise in bekannter Weise über einen Friktionsantrieb eingezogen. Stößt die Codekarte 8 an die Rollen 4 an, wird der Kontaktträger 9 in Einschubrichtung R mitgenommen. Die Zahnräder 2, 2a, 2b, 2c, die in Figur 7 mit gestrichelten Linien dargestellt sind, rollen im Zahnstangenkörper 10 im Uhrzeigersinn ab. Dabei durchläuft der Kontaktträger 9 die in Figur 8 dargestellte epizykloide Bahn, wobei hier allerdings die Bewegungsrichtung umgekehrt dargestellt ist.

Der Punkt 33 stellt den Bewegungsbeginn dar, das heißt die Codekarte 8 schlägt an die Rollen 4 an. Zu diesem Zeitpunkt befindet sich der Kontaktträger 9 ja bereits in einer mittleren Position. Im weiteren Verlauf senkt sich der Kontaktträger 9 weiter ab, bis die angefederten Kontakte 3 beginnen, die hier nicht näher dargestellte Kontaktierungsfläche der Codekarte 8 zu berühren. Diese Position ist mit 30 gekennzeichnet. Die wirksame effektive Kontaktierungslänge ist mit L_{K} bezeichnet. Dies ist der Bereich, in dem sichergestellt ist, daß Kontakt zwischen der Kontaktfläche und den Kontakten 3 hergestellt ist und die Codekarte 8 gelesen werden kann (vergleiche mittleres Bild von Figur 7).

Im weiteren Verlauf beginnt der Kontaktträger 9 sich von der Codekarte 8 abzuheben, wobei die Kontakte 3 an der mit Positionsziffer 31 bezeichneten Stelle außer Berührung mit der Kontaktierungsfläche auf der Codekarte kommen. Der Gesamtweg L_{ges} ist zurückgelegt, wenn die Exzenterachsen 6 der Zahnräder 2, 2a, 2b, 2c ihren oberen Totpunkt erreicht haben. Zu diesem Zeitpunkt ist der Kontaktträger 9 soweit angehoben, daß die Codekarte 8 in Einschubrichtung R weiter transportiert werden kann, und dabei an den Rollen 4 bzw. unter diesen hindurchgleitet. Da die Rollen 4 auf der Codekarte abrollen, tritt so gut wie kein Verschleiß an der Codekarte 8 auf. Soll die Codekarte 8 nicht einbehalten sondern herausgegeben werden, wird diese aus der mittleren Position gemäß Figur 7 entgegen der Einschubrichtung R angetrieben, wodurch der Kontaktträger 9 in hier nicht näher dargestellter Weise über Federkräfte in seine Ausgangslage zurück gezogen wird.

Um den Lesevorgang sicher einleiten zu können, kann alternativ am Rahmen 1 ein Schalter 20 vorgesehen sein, der dann betätigt wird, wenn die Kontakte 3 auf der Codekarte 8 sicher aufgesetzt sind (Kontaktierungslänge L_{K} der Bahnkurve B). Erst dann wird der der Lesevorgang eingeleitet.

### Bezugszeichenliste

- 1: Rahmen
- 2: Zahnrad
- 2a: Zahnrad
- 2b: Zahnrad
- 2c: Zahnrad
- 3: Kontakte
- 4: Rolle
- 5: Achse
- 6: Exzenterachse
- 7: Zentrierung
- 8: Codekarte
- 9: Kontaktträger
- 10: Zahnstangenkörper
- 11: Zahnstange
- 12: Zähne Zahnrad
- 13: zylindrischer Ansatz
- 14: Ansatz
- 15: Führungsbahn
- 20: Schalter
- 30: Beginn der Kontaktierung
- 31: Ende der Kontaktierung
- 32: Teillinie Zahnstange
- R: Einschubrichtung
- B: Bahnkurve
- L_{K}: Kontaktierungslänge
- L_{ges}: Gesamtweg

## Patentansprüche

1. Codekartenleser mit einem Kontaktträger (9), der in vertikaler und horizontaler Richtung bewegbar ist und Kontakte (3 ) aufweist, die in Berührung mit der Kontaktierungsfläche eines integrierten Schaltkreis einer Codekarte (8) bringbar sind, **dadurch gekennzeichnet, daß** die Vertikalbewegung des Kontaktträgers (9) in Abhängigkeit von der Horizontalbewegung durch ein kinematisch starres Getriebe einleitbar ist.

2. Codekartenleser nach Anspruch 1, **dadurch gekennzeichnet, daß** das Getriebe gebildet wird durch mindestens zwei exzentrisch an dem Kontaktträger (9) gelagerte Zahnräder (2), die auf einer ortsfesten Zahnstange (10) ablaufen, während der Kontaktträger (9) von der Codekarte (8) nach vorn geschoben wird.

3. Codekartenleser nach Anspruch 1, **dadurch gekennzeichnet, daß** der Kontaktträger (9) an seinem in Einschubrichtung (R) vorderen Ende einen Anschlag (4) aufweist und von einer gegen den Anschlag (4) anstoßenden Codekarte (8) in Horizontalrichtung mitnehmbar ist.

4. Codekartenleser nach Anspruch 2, **dadurch gekennzeichnet, daß** der Kontaktträger (9) vier konzentrisch an ihm gelagerte Zahnräder (2,2a,2b,2c) aufweist.

5. Codekartenleser nach Anspruch 3, **dadurch gekennzeichnet, daß** der Anschlag (4) von wenigstens einer Rolle gebildet wird.

6. Codekartenleser nach Anspruch 5, **dadurch gekennzeichnet, daß** der Anschlag (4) von zwei Rollen gebildet wird, die über eine Achse (5) miteinander verbunden sind.

7. Codekartenleser nach einem oder mehreren der vorstehenden Ansprüche, **dadurch gekennzeichnet, daß** die Bahnkurve (B) des Kontaktträgers (9) eine Epizykloide beschreibt.
